# EUROPÄISCHE PATENTANMELDUNG

(11) **EP 1 234 719 A2**
(43) Veröffentlichungstag der Anmeldung: **28.08.2002**
(21) Anmeldenummer: 02001366.0
(22) Anmeldetag: 19.01.2002
(51) Int. Cl.: B60Q 3/00

(54) **Anordnung zur indirekten Beleuchtung**

(30) Priorität: 22.02.2001 DE 10108491
(71) Anmelder: Dr.Ing. h.c.F. Porsche Aktiengesellschaft, 70435 Stuttgart (DE)
(72) Erfinder: Bach, Gerhard, 71229 Leonberg (DE); Selinger, Joachim, 75417 Mühlacker (DE)

(57) **Zusammenfassung**

Es wird eine Anordnung zur indirekten Beleuchtung mindestens einer abdeckbaren Ausnehmung (16) vorgeschlagen. Die mindestens eine Ausnehmung (16) ist seitlich an einem Cockpit (10) eines Kraftfahrzeuges angeordnet ist, wobei in der Ausnehmung (16) elektrische Bauteile (12) angebracht sind und wobei die Ausnehmung von einer abnehmbaren Abdeckung (14) verschließbar ist. Die Innenseite der abnehmbaren Abdeckung (14) ist mit einer reflektierenden Schicht (15) versehen, so daß das Licht einer im Fahrzeug vorhandenen Lichtquelle (17) zur Beleuchtung der elektrischen Bauteile in die Ausnehmung (16) reflektierbar ist.

## Beschreibung

Es wird eine Anordnung zur indirekten Beleuchtung gemäß dem Merkmal des Hauptanspruchs vorgeschlagen.

Aus der DE 199 02 666 ist bereits ein Ablagekasten, insbesondere Handschuhkasten für Fahrzeuge mit einem Kastengehäuse bekannt, wobei das Kastengehäuse mindestens zwei übereinander angeordnete durch eine Querwand voneinander getrennte Fächer und eine den Zugang zu den Fächern ermöglichende, frontseitige Kastenöffnung aufweist. Bei dieser Anordnung wird für eine ausreichende Beleuchtung der übereinanderliegenden Fächer an der oberen, querverlaufenden Gehäusewand nahe der Kastenöffnung eine nach unten strahlende Leuchte und an der Innenseite der Klappe mindestens ein Reflektor so angeordnet, daß in der Abklappstellung der Klappe auf den Reflektor auftreffendes Licht der Leuchte in die Tiefe mindestens eines unteren Faches reflektiert wird.

Diese Anordnung von Leuchte und reflektierender Fläche ermöglicht die Ausleuchtung, wobei jedoch eine separate Leuchte, deren Licht dann in das Innere reflektiert wird, vorgesehen ist. Mit der erfindungsgemäßen Anordnung kann auf eine solche Leuchte verzichtet werden und das Licht einer bereits im Fahrzeug angeordneten Leuchte, wie beispielsweise dem Lesespot, verwendet werden. Gleichzeitig ergibt sich dadurch eine Verringerung es Kabelaufwandes, was wiederum sicherstellt, daß eine solche indirekte Beleuchtung ohne zusätzlichen Mehraufwand an jeder Stelle des Kraftfahrzeuges vorgesehen sein kann.

Durch die in den Unteransprüchen aufgeführten Merkmale ergeben sich weitere vorteilhafte Verbesserungen der erfindungsgemäßen Anordnung.

So kann die reflektierende Fläche durch eine aufgeklebte Silberfolie oder eine Bedampfung mit Aluminium auf der Innenseite des Sicherungsdeckels gebildet werden, welche gleichzeitig mit der Sicherungsbelegung beschriftet werden, was dann beim Auswechseln einer Sicherung die Handhabung erleichtert.
Ein weiter Vorteil besteht darin, die Abdeckklappe komplett lösbar aber mit einer Sicherung beispielsweise mit einer Art Fangband zu versehen, da so die Abdeckklappe beliebig zur Reflexion des Lichtes in die gewünschte Lage gebracht werden kann, aber gleichzeitig gegen Herunterfallen gesichert ist.

Ausführungsbeispiele der Erfindung sind in der Zeichnung dargestellt und in der nachfolgenden Beschreibung näher erläutert.

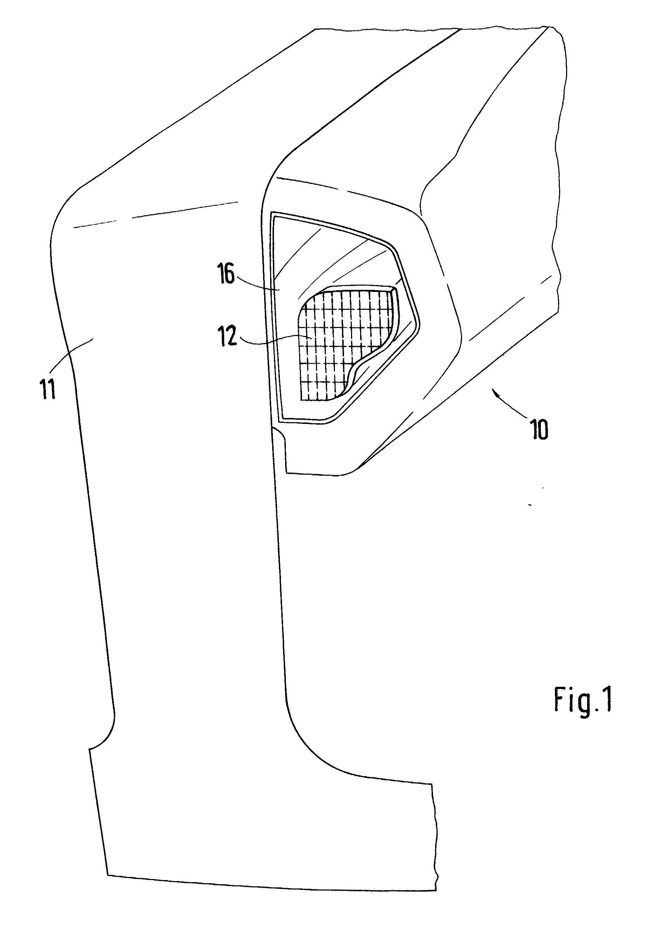

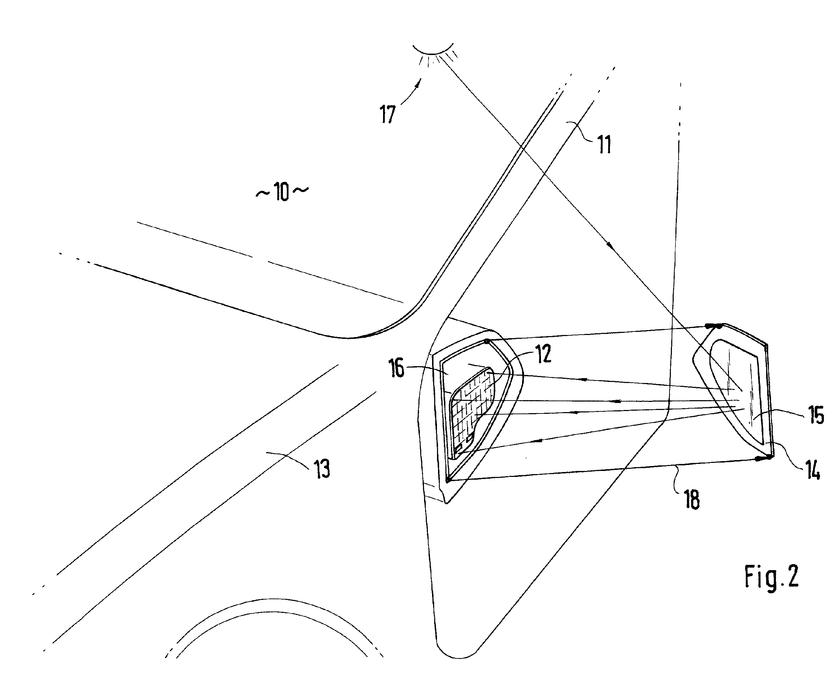

Es zeigen Figur 1 eine schematischer Darstellung die Seitenansicht des Cockpits und Figur 2 die Lichtreflexion zur Beleuchtung des Sicherungsträgers als Prinzipdarstellung.

Die Figur 1 zeigt in schematischer Darstellung die Seitenansicht des Cockpits mit A-Säule des Kraftfahrzeuges. Am Cockpit 10 ist entweder auf einer oder möglicherweise auch auf beiden Seiten eine Ausnehmung 16 vorgesehen, in welcher ein Sicherungsträger 12 angeordnet ist. Die Ausnehmung 16 wird von einer hier in Fig. 1 nicht dargestellte abnehmbare Abdeckung 14 verschlossen.

In der Fig. 2 ist nochmals der Erfindungsgegenstand dargestellt, wobei das Cockpit aus der Perspektive schräg von vorne schematisch dargestellt ist. Die Figur 2 zeigt den Strahlenverlauf für die Lichtreflexion zur Beleuchtung des Sicherungsträgers 12. Es wird ausschnittweise die A-Säule 11, das Cockpit 10 und ein Kotflügel 13 dargestellt. An der in Fahrtrichtung linken Seite des Cockpits 10 ist der Sicherungsträger 12 in der Ausnehmung 16 angeordnet, welcher von der Abdeckung 14 beim Verschließen der Ausnehmung 16 verdeckt wird. Die abnehmbare Abdeckung 14 kann bei Bedarf von der Seitenfläche des Cockpits 10 gelöst werden, so daß der Sicherungsträger darunter für den Fahrer und einen entsprechenden Austausch der elektrischen Bauelemente zugänglich ist. Die Innenseite dieser Abdeckung 14 ist mit einer reflektierenden Schicht versehen. Dieser Reflektor 15 kann eine silberfarbene Folie sein, auf welcher gleichzeitig ein Aufdruck für die Sicherungsbelegung vorgesehen ist. Mittels dieses Reflektors 15 kann das Licht von einer im Inneren des Fahrzeuges vorhandenen Lichtquelle 17, beispielsweise dem Lesespot 17 so auf den Sicherungsträger 12 gelenkt werden, daß für den Fahrer ein einfacher Austausch der Sicherungen möglich ist. Die abnehmbare Abdeckung 14 kann bei einer Wegnahme entweder komplett vom Cockpit lösbar sein oder beispielsweise mittels einer Art Fangband am Cockpit befestigt sein. In jedem Fall ist es möglich, den Deckel separat so zu bewegen, daß das Licht der Lichtquelle 17 auf die gewünschte Stelle des Sicherungsträgers 12 reflektiert wird.

## Patentansprüche

1. Anordnung zur indirekten Beleuchtung mindestens einer abdeckbaren Ausnehmung (16), wobei die mindestens eine Ausnehmung (16) seitlich an einem Cockpit (10) eines Kraftfahrzeuges angeordnet ist, wobei in der Ausnehmung (16) elektrische Bauteile (12) angebracht sind, wobei die Ausnehmung von einer abnehmbaren Abdeckung (14) verschließbar ist und wobei die Innenseite der abnehmbaren Abdeckung (14) mit einer reflektierenden Schicht (15) versehen ist, so daß das Licht einer im Fahrzeug vorhandenen Lichtquelle (17) zur Beleuchtung der elektrischen Bauteile in die Ausnehmung (16) reflektierbar ist.

2. Anordnung nach Anspruch 1 **dadurch gekennzeichnet, daß** die reflektierende Schicht eine Silberfolie ist.

3. Anordnung nach Anspruch 1, **dadurch gekennzeichnet, daß** die reflektierende Schicht durch Bedampfen der Innenseite der Abdeckung mit Aluminium bildbar ist.

4. Anordnung nach Anspruch 1, **dadurch gekennzeichnet, daß** die elektrischen Bauteile Sicherungen auf einem Sicherungsträger sind.

5. Anordnung nach einem der vorherigen Ansprüche, **dadurch gekennzeichnet, daß** als Lichtquelle (17) der Lesespots verwendbar ist.

6. Anordnung nach Anspruch 5, **dadurch gekennzeichnet, daß** auf der reflektierende Schicht die Belegung des Sicherungsträgers aufgedruckt ist.

7. Anordnung nach einem der vorherigen Ansprüche, **dadurch gekennzeichnet, daß** die abnehmbare Abdeckung (14) mit einem Fangband (18) am Cockpit (10) befestigbar ist.
